# EUROPÄISCHE PATENTSCHRIFT

(11) **EP 3 259 234 B1**
(45) Veröffentlichungstag und Bekanntmachung des Hinweises auf die Patenterteilung: **03.04.2019**
(21) Anmeldenummer: 15832791.6
(22) Anmeldetag: 22.12.2015
(51) Int. Cl.: C02F 1/44, B01D 65/02, C02F 1/42, C02F 1/50, C02F 1/68, C02F 103/42

(54) **WASSERAUFBEREITUNGSSYSTEM UND VERFAHREN ZUR AUFBEREITUNG VON IN EINEM WASSERRESERVOIR BEFINDLICHEM WASSER**
WATER TREATMENT SYSTEM AND METHOD FOR TREATING WATER LOCATED IN A WATER RESERVOIR
SYSTÈME DE TRAITEMENT DE L'EAU ET PROCÉDÉ DE TRAITEMENT DE L'EAU QUI SE TROUVE DANS UN RÉSERVOIR À EAU

(30) Priorität: 22.12.2014 AT 509372014
(43) Veröffentlichungstag der Anmeldung: 27.12.2017
(73) Patentinhaber: VEDER Waterbox GmbH, 5301 Eugendorf (AT)
(72) Erfinder: EDER, Harald, 5301 Eugendorf (AT); VIECHTBAUER, Volker, 5330 Fuschl am See (AT)
(74) Vertreter: Burger, Hannes
(86) Internationale Anmeldenummer: PCT/AT2015/050328
(87) Internationale Veröffentlichungsnummer: WO 2016/100998

(56) Entgegenhaltungen:
- EP-A1- 0 494 334
- US-A1- 2006 196 819
- US-B1- 6 755 970

## Beschreibung

Die Erfindung betrifft ein Wasseraufbereitungssystem zur Aufbereitung von in einem Wasserreservoir befindlichem Wasser, sowie ein Verfahren zur Aufbereitung von in einem Wasserreservoir befindlichem Wasser. Insbesondere betrifft die Erfindung ein Wasseraufbereitungssystem und ein Verfahren zur Reinigung und Entkeimung von Wasser, welches mit Menschen oder Tieren in Kontakt kommt, beispielweise Schwimmbad- oder Schwimmteichwasser, oder Wasser in Aquarien und dergleichen.

Wasser in Wasserreservoirs unterliegen umwelteinflussbedingt einem permanenten Eintrag von Verschmutzungen, insbesondere Verschmutzungen in Partikelform. Beispielsweise können aus der Luft permanent anorganische und organische Substanzen, Partikel und Kleinstpartikel in das Wasser aufgenommen werden. Zusätzlich können partikuläre Verschmutzungen auch über Menschen oder Tiere, insbesondere Insekten eingebracht werden. Bei Gewässern, welche zur Benutzung durch Menschen vorgesehen sind, beispielsweise zum Baden bzw. Schwimmen, sind insbesondere in das Wasser eingebrachte Mikroorganismen und Keime als potentiell gefährdend, insbesondere als gesundheitsschädlich anzusehen. Solche Mikroorganismen, beispielsweise Bakterien, Pilze, oder mikroskopische Algen neigen dazu, sich an den dem Wasser zugewandten Oberflächen eines Wasserreservoirs abzulagern, und sich dort zu vermehren. Solche Ablagerungen von Keimen bilden sich insbesondere bei stagnierenden Strömungsverhältnissen, also wenn das Wasser im Wasserreservoir kaum umgewälzt und durchmischt wird.

Zur Entkeimung von Wasser in Wasserreservoirs, zum Beispiel Schwimmbädern, Badebecken und dergleichen, ist es üblich, das Schwimm- bzw. Badewasser mittels keimabtötenden Chemikalien aufzubereiten bzw. zu desinfizieren. In den meisten Fällen kommen dabei halogenbasierte, insbesondere chlor- oder brom-haltige Desinfektionsmittel zum Einsatz. Um eine ausreichende Desinfektionswirkung zu erzielen, sind insbesondere bei häufig von Menschen benutzten Gewässern, beträchtliche Konzentrationen dieser Desinfektionsmittel notwendig. Nachteilig hierbei ist unter anderem die haut- und schleimhautreizende Wirkung derartiger Desinfektionsmittel. Weiters kommt es durch den Einsatz halogenfreisetzender Desinfektionsmittel häufig zur Bildung unangenehmer Gerüche.
In der jüngeren Vergangenheit wurden einige Anstrengungen bzw. Versuche unternommen, um halogenhaltige Desinfektionsmittel zu ersetzen, bzw. um wenigstens die notwendige Menge an derartigen, halogenhaltigen Desinfektionsmittel möglichst gering zu halten. Unter anderem wurden Untersuchungen durchgeführt, bei welchen Wässer in Schwimmbädern zwecks Entfernung von Mikroorganismen bzw. Keimen mittels Membranfiltrationsanlagen aufbereitet wurden.

Die Europäische Patentanmeldung EP 0 494 334 A1 zum Beispiel offenbart die Verwendung mikroporöser Keramikfilter zur Aufbereitung von Schwimmbeckenwasser.

Es besteht jedoch weiterhin Optimierungsbedarf, insbesondere hinsichtlich der Aufbereitungs- und Betriebseffizienz derartiger Wasseraufbereitungsverfahren und Aufbereitungssysteme. Aufgabe der Erfindung ist es daher, ein Wasseraufbereitungssystem und ein Verfahren zur Wasseraufbereitung bereitzustellen, durch welche die Reinigungs- und Betriebseffizienz bei der Aufbereitung von in Wasserreservoirs befindlichen Wasser verbessert werden kann.
Die Aufgabe der Erfindung wird einerseits dadurch gelöst, dass ein verbessertes Wasseraufbereitungssystem zur Aufbereitung von in einem Wasserreservoir, zum Beispiel in einem Schwimmbecken, Teich oder Aquarium befindlichem Wasser, insbesondere zur Reinigung und Entkeimung des Wassers bereitgestellt wird.
Das Wasseraufbereitungssystem umfasst eine Umlaufrezirkulationsvorrichtung mit einer Fördervorrichtung, einer oder mehrerer Entnahmeleitung(en) zur Entnahme einer festlegbaren Menge des Wassers aus dem Wasserreservoir pro Zeiteinheit, und einer oder mehrerer Rückführungsleitung(en) zur Rückführung des Wassers in das Wasserreservoir. Weiters umfasst das Wasseraufbereitungssystem eine in der Umlaufrezirkulationsvorrichtung angeordnete Membranfiltrationsvorrichtung, welche mehrere strömungstechnisch parallel geschaltete Filtermodule umfasst. Dabei sind die Filtermodule beschickungsseitig wahlweise absperrbar oder durchströmbar mit der oder den Entnahmeleitung(en) und filtratseitig wahlweise absperrbar oder durchströmbar mit der oder den Rückführungsleitungen leitungsverbunden. Außerdem sind zur Reinigung der Filtermodule die Filtermodule filtratseitig wahlweise absperrbar oder durchströmbar mit einer Rückspülflüssigkeitsquelle leitungsverbunden sowie die Filtermodule beschickungsseitig wahlweise absperrbar oder durchströmbar mit einem Abfluss leitungsverbunden.

Insbesondere ist eine Gaszufuhrvorrichtung vorgesehen, welche einerseits zur Reinigung der Filtermodule wahlweise absperrbar oder durchströmbar beschickungsseitig mit den Filtermodulen der Membranfiltrationsvorrichtung leitungsverbunden ist, sodass alle Filtermodule mit Gas gespült werden können, und welche Gaszufuhrvorrichtung außerdem zur Umwälzung und Durchmischung des Wassers im Wasserreservoir wahlweise absperrbar oder durchströmbar mit der oder den Rückführungsleitung(en) der Umlaufrezirkulationsvorrichtung leitungsverbunden ist.

Filtermodule von Membranfiltrationsanlagen beinhalten in der Regel eine Vielzahl an mikroporösen Filtermembranen, beispielsweise Flach- oder Hohlfasermembranen. Die Filterwirkung einer Membran ist dabei dadurch gekennzeichnet, dass das Wasser durch die Membranwände strömt, und die zu entfernenden Partikel, zum Beispiel Kulturen von Mikroorganismen auf einer Seite einer Membran zurückgehalten werden. Unter den Begriffen ,beschickungsseitig' bzw. ,Beschickungsseite' wird obenstehend und im Folgenden diejenige Seite des Filtermoduls verstanden, auf welcher im Filtrationsbetrieb das zu filtrierende Wasser in ein Filtermodul eingeleitet wird. Unter den Begriffen ,filtratseitig' bzw. ,Filtratseite' wird obenstehend und im Folgenden diejenige Seite des Filtermoduls verstanden, auf welcher im Filtrationsbetrieb das filtrierte Wasser aus einem Filtermodul abgezogen wird.

Im Filtrationsbetrieb eines Filtermoduls der Membranfiltrationsvorrichtung erhöht sich aufgrund des Zurückhaltens der Partikel beschickungsseitig die Partikelmenge im Filtermodul. Dadurch kommt es im Laufe der Zeit beschickungsseitig zur Bildung von Ablagerungen auf den entsprechenden Membranoberflächen eines Filtermoduls, welche den weiteren Wasseraufbereitungsbetrieb beeinträchtigen können. Aus diesem Grund müssen die Filtermodule der Membranfiltrationsvorrichtung, abhängig vom Verschmutzungsgrad des Wassers im Wasserreservoir, in bestimmten Zeitintervallen gereinigt, insbesondere durch Rückspülen des Filtermoduls gereinigt werden. Hierzu können die Filtermodule von den Entnahme- und Rückführungsleitungen der Umlaufrezirkulationsvorrichtung abgesperrt werden, und die Filtermodule unter Umkehrung der Flussrichtung im Vergleich zum Filtrationsbetrieb mit der Rückspülflüssigkeit gereinigt werden.

Durch die Merkmale des vorgeschlagenen Wasseraufbereitungssystems kann die Gaszufuhrvorrichtung einerseits zur beschickungsseitigen Spülung der Membranen der Filtermodule mit einem Gas verwendet werden. Eine solche Gasspülung ist insbesondere zweckmäßig, um die Partikel- und Keimablagerungen während eines Rückspülvorgangs von den Membranwänden abzulösen, und die Membranen der Filtermodule beschickungsseitig zu reinigen. Beschickungsseitige Ablagerungen an den Membranwänden können durch die eingebrachten Gasblasen aufgebrochen, und von den Membranwänden entfernt werden. Zusätzlich können die Membranen durch den Gaseintrag in das Filtermodul in verstärkte Bewegung versetzt werden bzw. deformiert werden. Durch die Deformation und Agitation der Membranen können mechanische Kräfte, beispielsweise durch Reibung und Deformation, generiert werden, welche ebenfalls ein Aufbrechen und Ablösen partikulärer Ablagerungen von den Membranen fördern. Durch ein derartiges, beschickungsseitiges Spülen der Membranen eines Filtermoduls mit einem Gas, beispielsweise Druckluft, kann daher insbesondere die Durchgängigkeit der Membranen wieder verbessert werden, bzw. die Wasserdurchflussmenge über die Membranen wieder erhöht werden. Die gasunterstützt von den Membranoberflächen abgelösten Ablagerungen können während eines Rückspülvorgangs mittels die Rückspülflüssigkeit über den Abfluss entsorgt werden. Durch das Rückspülen können auch Ablagerungen aus den Membranporen entfernt werden. Insbesondere kann so ein sogenanntes ,Biofouling' der Membranen wirksam hintangehalten werden.

Zusätzlich kann durch die Merkmale des vorgeschlagenen Wasseraufbereitungssystems mittels der Gaszufuhrvorrichtung aber auch Gas direkt in das Wasserreservoir eingebracht werden. Dadurch wird die Umwälzung und Durchmischung des Wassers im Wasserreservoir gefördert, und kann eine Stagnation des Wassers im Wasserreservoir vermieden werden. In weiterer Folge kann auf diese Weise der Bildung von partikulären Ablagerungen, insbesondere die Bildung von Keimablagerungen bzw. die Bildung von Mikroorganismenkulturen an den dem Wasser zugewandten Oberflächen des Wasserreservoirs entgegengewirkt werden. Insbesondere kann so die Bildung von Algenschichten im Wasserreservoir hintangehalten werden.

Wenn gewünscht, kann der Gaseintrag, insbesondere bei Badepools bzw. Badebecken selbstverständlich auch zur Steigerung des Wohlbefindens der Benutzer bzw. Badegäste angewendet werden, zum Beispiel indem durch geeignete, düsenartige Gas-Einbringöffnungen whirlpoolartige Verwirbelungen im Pool generiert werden.

Zur Steigerung der Reinigungseffizienz für die Membranen der Filtermodule kann es zweckmäßig sein, dass die Filtermodule wenigstens zwei Gaseinleitungsanschlüsse aufweisen. Dadurch kann das Gas an wenigstens zwei verschiedenen Stellen in ein Filtermodul eingebracht werden, wodurch besonders turbulente Gasströmungen im Filtermodul generiert werden können. So kann auch die Dauer eines Spülvorgangs mit Gas vorteilhafterweise verringert werden, wodurch die Gaszufuhrvorrichtung des Wasseraufbereitungssystems vermehrt zur Umwälzung bzw. Durchmischung des Wassers im Wasserreservoir einsetzbar ist.

Bei einer Weiterbildung der Erfindung kann vorgesehen sein, dass jedem Filtermodul der Membranfiltrationsvorrichtung filtratseitig ein Absperrorgan zugeordnet ist. Dadurch können die Filtermodule unter Umkehr der Flussrichtung über die Filtermodule jeweils separat und unabhängig voneinander mittels der Rückspülflüssigkeitsquelle rückgespült werden. Auf diese Weise können aufwendige und großdimensionierte Maßnahmen bzw. Vorrichtungen zur Bereitstellung hoher Rückspülflüssigkeitsmengen bzw. hoher Rückspülflüssigkeitsvolumsströme erübrigt werden, wodurch die Produktions- bzw. Beschaffungskosten für das Wasseraufbereitungssystem gesenkt werden können.

Bei einer weiteren Ausgestaltungsform kann vorgesehen sein, dass die Filtermodule der Membranfiltrationsvorrichtung beschickungsseitig über ein gemeinsames Absperr- oder Durchflussregelorgan mit der oder den Entnahmeleitung(en) leitungsverbunden sind, und die Filtermodule beschickungsseitig über ein gemeinsames Durchflussregel- oder Absperrorgan mit dem Abfluss leitungsverbunden sind, und dass die Filtermodule filtratseitig über wenigstens ein Umschaltmittel mit der oder den Rückführungsleitung(en) der Umlaufrezirkulationsvorrichtung und der Rückspülflüssigkeitsquelle leitungsverbunden sind. Durch diese Merkmale kann mit wenigen, einfachen Mitteln bedarfsabhängig oder in periodischen Zeitintervallen ein Reinigungsvorgang für die Filtermodule der Membranfiltrationsvorrichtung eingeleitet bzw. durchgeführt werden. Dabei können die Absperr- oder Regelorgane bzw. das wenigstens eine Umschaltmittel benutzt werden, um die Filtermodule strömungstechnisch von der oder den Entnahmeleitung(en) bzw. der oder den Rückführungsleitungen zu trennen, und in weiterer Folge kann ein Reinigungsvorgang unter Umkehr der Flussrichtung über die Filtermodule durchgeführt werden. Die dabei anfallende, relativ stark verschmutzte Spülflüssigkeit kann nach filtratseitiger Zufuhr mittels der Rückspülflüssigkeitsquelle und Durchtritt durch ein Filtermodul direkt über die gemeinsame Leitungsverbindung in den Abfluss entsorgt werden, sodass ein möglichst effizienter Betrieb des Wasseraufbereitungssystems gewährleistet werden kann. Bevorzugt erfolgt bei einer Rückspülung eines Filtermoduls gleichzeitig auch eine beschickungsseitige Gasspülung des Filtermoduls.

Eine weitere, vorteilhafte Ausgestaltungsform des Wasseraufbereitungssystems kann dadurch bereitgestellt werden, dass die Rückspülflüssigkeitsquelle durch eine Trinkwasserzuleitung gebildet ist. Durch dieses bauliche Merkmal können die Filtermodule mit Trinkwasser rückgespült werden. Dadurch ist auch ein Rückspülmedium mit verhältnismäßig hohem Reinheitsgrad zur Reinigung der Filtermodule bereitgestellt. Weiters kann so auf andere, aufwendigere Rückspülvorrichtungen, wie zum Beispiel Rückspülpumpen, Filtratsammelbecken oder dergleichen, verzichtet werden. Auf diese Weise kann eine wirksame und gleichzeitig kosteneffiziente Variante zum Rückspülen bzw. Reinigen der Filtermodule der Membranfiltrationsvorrichtung bereitgestellt werden. Außerdem ist auf diese Weise die Gefahr eines unbeabsichtigten bzw. unerwünschten Eintrags von Verschmutzungen in das Wasserreservoir durch das Wasseraufbereitungssystem selbst, zumindest weitestgehend minimiert.

In diesem Zusammenhang kann eine Ausgestaltungsvariante vorteilhaft sein, bei welcher die Filtermodule ohne Zwischenschaltung einer Fördervorrichtung mit der Trinkwasserzuleitung leitungsverbunden sind. Auf diese Weise können die Filtermodule alleinig durch den vorhandenen Trinkwasserzuleitungsdruck rückgespült werden, und sind zusätzliche Rückspülvorrichtungen erübrigt. Dadurch kann eine Rückspülung eines Filtermoduls in besonders energie- und kosteneffizienter Art und Weise durchgeführt werden. Insbesondere hat sich erwiesen, dass bei Rückspülen von jeweils nur einer Teilmenge an Filtermodulen und insbesondere nur einem Filtermodul zur selben Zeit, der jeweils vorhandene Trinkwasserzuleitungsdruck ausreichend ist, um ein wirksames Rückspülen der Filtermodule zu bewerkstelligen.

Zum Ausgleichen von Druckschwankungen, oder falls die Trinkwasserzuleitung einen sehr hohen Wasserdruck aufweist, kann es zweckmäßig sein, der Trinkwasserzuleitung für die Filtermodule einen Druckminderer zuzuordnen.

Weiters kann vorgesehen sein, dass der Trinkwasserzuleitung eine Dosiervorrichtung zur Zudosierung von Reinigungschemikalien in das Trinkwasser zugeordnet ist. Die Reinigungschemikalien können dabei beispielsweise durch Tenside, Desinfektionsmittel oder andere Substanzen, welche eine effiziente Reinigung der Membranen unterstützen, gebildet sein. Dadurch kann die Reinigungseffizienz für die Filtermodule weiter gesteigert werden, und damit ein möglichst problemloser Betrieb des Wasseraufbereitungssystems gewährleistet werden.

Bei einer weiteren, zweckmäßigen Ausgestaltungsvariante kann vorgesehen sein, dass die Umlaufrezirkulationsvorrichtung einen Durchflussmengensensor zur Erfassung der Durchflussmenge des Wassers über das Filtermodul im Filtrationsbetrieb umfasst. Dadurch kann ein Reinigungsvorgang für die Filtermodule bei einer Unterschreitung eines festlegbaren Schwellwerts für die Durchflussmenge vorgenommen werden. Der Reinigungsvorgang kann dabei beispielweise automatisiert von einer entsprechend programmierten Steuerungsvorrichtung des Wasseraufbereitungssystems ausgelöst werden, wodurch ein besonders effizienter Betrieb des Wasseraufbereitungssystems bereitgestellt werden kann.

Alternativ und/oder zusätzlich kann die Umlaufrezirkulationsvorrichtung auch zwei oder mehr als zwei Drucksensoren zur Erfassung des Druckverlustes über die Filtermodule im Filtrationsbetrieb umfassen. Dadurch kann ein Reinigungsvorgang für ein Filtermodul bei Überschreitung eines festlegbaren Schwellwerts für den Druckverlust vorgenommen bzw. eingeleitet werden.

Weiters kann es sinnvoll sein, dass die Umlaufrezirkulationsvorrichtung des Wasseraufbereitungssystems einen Aktivkohlefilter umfasst. Mit einem derartigen Aktivkohlefilter sind auch Substanzen, insbesondere organische Substanzen aus dem Wasser entfernbar, welche mittels der Membranfiltrationsvorrichtung nicht oder nur ungenügend aus dem Wasser abgetrennt werden können. Dabei kann es vor allem um im Wasser gelöste, nicht-partikuläre Stoffe handeln. Bevorzugt ist ein derartiger Aktivkohlefilter wahlweise absperrbar oder durchströmbar mit der oder den Entnahmeleitung(en) der Umlaufrezirkulationsvorrichtung, oder wahlweise absperrbar oder durchströmbar mit der oder den Rückführungsleitung(en) der Umlaufrezirkulationsvorrichtung leitungsverbunden, sodass das Wasser in der Umlaufrezirkulationsvorrichtung wahlweise über den Aktivkohlefilter geführt werden kann, oder über eine Bypassleitung um den Aktivkohlefilter herum geführt werden kann.

Bei einer weiteren, vorteilhaften Ausgestaltungsform des Wasseraufbereitungssystems kann vorgesehen sein, dass die Umlaufrezirkulationsvorrichtung einen Ionentauscher zur Entfernung von ionischen Nährstoffverbindungen umfasst. Dadurch kann zusätzlich zur Entfernung von Mikroorganismen durch die Membranfiltrationsvorrichtung, den Mikroorganismen auch die Grundlage zur Vermehrung zumindest teilweise entzogen werden, und kann das Wachstum von Mikroorganismen, beispielsweise Bakterienkulturen im Wasser wirksam weiter unterdrückt bzw. zumindest die Vermehrung der Mikroorganismen verringert werden. Selbstverständlich können sowohl Anionentauscher und/oder Kationentauscher zur Anwendung kommen, um dem Wasser Nährstoff-Ionen in der anionischen und/oder kationischen Form zu entziehen.

Außerdem kann vorgesehen sein, dass das Wasseraufbereitungssystem eine Dosiervorrichtung zur Beimengung von Duftstoffen in das Wasser umfasst. Eine derartige Dosiervorrichtung kann dabei strömungstechnisch in der Umlaufrezirkulationsvorrichtung angeordnet, oder dem Wasserreservoir selbst zugeordnet sein. Duftstoffe können dem Wasser beigemengt werden, um insbesondere das Wohlbefinden von Personen, zum Beispiel von Badegästen zu steigern. Ermöglicht ist ein Beimengen von Duftstoffen insbesondere durch die Aufbereitungselemente des vorgeschlagene Wasseraufbereitungssystems, welche zumindest weitestgehend bzw. meistens ein Beimengen von chlorhaltigen bzw. chlorfreisetzenden Desinfektionschemikalien in das Wasser erübrigen.

Eine weitere, zweckmäßige Ausgestaltungsvariante des Wasseraufbereitungssystems kann derart ausgestaltet sein, dass es eine Dosiervorrichtung zur Beimengung von antimikrobiell wirkenden Substanzen in das Wasser umfasst. Auf diese Weise können antimikrobiell wirkende Stoffe, wie zum Beispiel Silbernanopartikel in das Wasser eingebracht werden, wodurch sich die Wasserqualität nochmals weiter steigern lassen kann.

Weiters kann eine Ausgestaltungsform des Wasseraufbereitungssystems zweckmäßig sein, bei welcher die Anzahl und die Filtrationskapazität der Filtermodule derart gewählt sind, dass durch die Rezirkulation und Filtration des Wassers eine Entfernungsrate für Mikroorganismen erzielbar ist, welche größer ist als die Wachstumsrate der Mikroorganismen in dem Wasser im gleichen Zeitintervall. So kann eine Zunahme der Gesamtmenge an Mikroorganismen im Wasser wirksam hintangehalten werden, ohne dass hierfür der Einsatz von Desinfektionsmitteln nötig ist.

Schließlich kann es auch sinnvoll sein, die Anzahl und die Filtrationskapazität der Filtermodule derart auszuwählen, dass das insgesamt im Wasserreservoir enthaltene Volumen an Wasser, pro Tag zumindest 1 Mal und bevorzugt zwischen 2 Mal und 10 Mal mittels der Membranfiltrationsvorrichtung filtriert werden kann. Auf diese Weise kann erreicht werden, dass pro Tag eine ausreichende Menge des Wassers mittels des Wasseraufbereitungssystems aufbereitet bzw. gereinigt werden kann.

Die Aufgabe der Erfindung wird aber auch dadurch gelöst, dass ein Verfahren zur Aufbereitung von in einem Wasserreservoir, zum Beispiel in einem Schwimmbecken, Teich oder Aquarium befindlichem Wasser, insbesondere zur Reinigung und Entkeimung des Wassers bereitgestellt wird. Das Verfahren umfasst dabei folgende Verfahrensschritte:
- Entnahme einer festlegbaren Menge des Wassers pro Zeiteinheit aus dem Wasserreservoir über eine oder mehrere Entnahmeleitung(en) einer Umlaufrezirkulationsvorrichtung;
- Filtration der entnommenen Teilmenge des Wassers mittels einer in der Umlaufrezirkulationsvorrichtung angeordneten Membranfiltrationsvorrichtung, wobei die Membranfiltrationsvorrichtung mehrere strömungstechnisch parallel geschaltete Filtermodule umfasst,
- Rückführung des Wassers in das Wasserreservoir über eine oder mehrere Rückführungsleitung(en) der Umlaufrezirkulationsvorrichtung;
- Periodisches oder bedarfsabhängiges Reinigen der Membranen der Filtermodule durch Rückspülen mit einer Rückspülflüssigkeit unter Umkehrung der Flussrichtung über die Filtermodule im Vergleich zum Filtrationsbetrieb und Abführen der beim Rückspülen anfallenden Abfallflüssigkeit über einen Abfluss.

Insbesondere ist vorgesehen, dass zur Reinigung der Membranen der Filtermodule der Membranfiltrationsvorrichtung mittels einer Gaszufuhrvorrichtung beschickungsseitig Gas in die Filtermodule eingeleitet wird, oder mittels der Gaszufuhrvorrichtung das Gas periodisch oder bedarfsabhängig zur Umwälzung des Wassers im Wasserreservoir an einer oder mehreren Stellen in das Wasserreservoir eingeleitet wird.

Durch die Verfahrensmaßnahmen ist lediglich eine Gaszufuhrvorrichtung erforderlich, um einerseits die Membranen eines Filtermoduls der Membranfiltrationsvorrichtung durch Gaszufuhr zu reinigen, und andererseits die Umwälzung und Durchmischung des Wassers im Wasserreservoir zu unterstützen, und eine Stagnation des Wassers im Wasserreservoir zu vermeiden. Im Zuge eines Reinigungsvorgangs für die Filtermembranoberflächen durch Gasspülung werden die Filtermodule bevorzugt auch unter Umkehr der Flussrichtung im Vergleich zum Filtrationsbetrieb auch rückgespült, um die Reinigungseffizienz zu verbessern. So können die von den Membranoberflächen abgelösten Ablagerungen mittels der Rückspülflüssigkeit über den Abfluss entsorgt werden. Durch das Rückspülen können zusätzlich auch Ablagerungen aus den Membranporen entfernt werden. Insbesondere kann so ein sogenanntes ,Biofouling' der Membranen wirksam hintangehalten werden.

Bevorzugt erfolgt die Einleitung des Gases in das Wasserreservoir an möglichst vielen Stellen im Wasserreservoir, um die Wirksamkeit der Durchmischung bzw. Verwirbelung des Wassers im Wasserreservoir zu erhöhen. Die vorteilhafte Wirkungsweise der Gaseinleitung in ein Filtermodul bzw. in das Wasserreservoir wurde bereits obenstehend im Detail erläutert, weshalb an dieser Stelle auf eine nochmalige Beschreibung verzichtet werden kann. Durch die erfindungsgemäßen Maßnahmen kann ein besonders betriebseffizientes Verfahren zur Aufbereitung von Wasser bereitgestellt werden.

Bei einer weiterbildenden Ausführungsform des Verfahrens kann vorgesehen sein, dass ein Reinigungsvorgang für die Membranen der Filtermodule derart durchgeführt wird, dass gleichzeitig in alle Filtermodule beschickungsseitig Gas eingeleitet wird, und in sequentieller Abfolge jeweils festlegbare Teilmengen der Filtermodule mit der Rückspülflüssigkeit unter Umkehr der Flussrichtung über die Filtermodule rückgespült werden. Dadurch können aufwendige und großdimensionierte Maßnahmen bzw. Vorrichtungen zur Bereitstellung hoher Rückspülflüssigkeitsmengen bzw. hoher Rückspülflüssigkeitsvolumsströme erübrigt werden, wodurch die Betriebs- und Kosteneffizienz des Verfahrens gesteigert werden können. Gleichzeitig kann aber dennoch eine hohe Reinigungseffizienz bereitgestellt werden, da die Ablagerungen an den Membranoberflächen durch die kontinuierliche Gasspülung aller Filtermodule während des gesamten Reinigungsvorgangs in effektiver Art und Weise durch das Spülgas von den Membranoberflächen abgebrochen bzw. abgelöst werden können. Diese bereits gelockerten Ablagerungen können

Ein Reinigungsvorgang für die Membranen der Filtermodule kann aber auch derart durchgeführt werden, dass gleichzeitig in alle Filtermodule beschickungsseitig Gas eingeleitet wird, und in sequentieller Abfolge jedes Filtermodul einzeln mit der Rückspülflüssigkeit unter Umkehr der Flussrichtung über die Filtermodule rückgespült wird. Dadurch ist eine besonders betriebs- und kosteneffiziente Verfahrensführung bereitgestellt.

Weiters kann es zweckmäßig sein, dass die Filtermodule mit Trinkwasser rückgespült werden. Durch diese Verfahrensmaßnahme kann die Reinigungseffizienz für ein Filtermodul nochmals deutlich gesteigert werden, da eine vergleichsweise saubere Rückspülflüssigkeit verwendet werden kann. Das Trinkwasser wird dabei unter Umkehrung der Flussrichtung im Vergleich zum Filtrationsbetrieb durch die Filtermodule geführt. Dadurch können werden die gasunterstützt von den beschickungsseitigen Membranoberflächen losgelösten Ablagerungen durch diesen Trinkwasserstrom in effizienter Art und Weise von den Membranoberflächen entfernt, und unmittelbar über den Abfluss aus den Filtermodulen abgeführt werden.

Die Reinigungseffizienz für ein Filtermodul kann dabei nochmalig weiter gesteigert werden, wenn dem Trinkwasser während des Rückspülens Reinigungschemikalien beigemengt werden. Solche Reinigungschemikalien können dabei beispielsweise durch Tenside, Desinfektionsmittel oder andere Substanzen, welche eine effiziente Reinigung der Membranen unterstützen, gebildet sein.

Weiters kann eine Ausführungsform des Verfahrens zur Wasseraufbereitung zweckmäßig sein, bei welcher ein Filtermodul mit einem Rückspülflüssigkeitsvolumsstrom zwischen 70 l/m²ₘₑₘ*h und 700 l/m²ₘₑₘ*h und einer Strömungsgeschwindigkeit des Rückspülwassers durch das Filtermodul zwischen 0,02 m/s und 1,0 m/s rückgespült wird. Die obenstehende Angabe für den Rückspülflüssigkeitsvolumsstrom in l/m²*h bezeichnet den Volumsstrom an Rückspülflüssigkeit in ,Liter pro Quadratmeter Membranoberfläche des Filtermoduls und pro Stunde'. Die angegebenen Bereiche für den Rückspülflüssigkeitsvolumsstrom bzw. die Strömungsgeschwindigkeit der Rückspülflüssigkeit, insbesondere Trinkwasser, durch ein Filtermodul, haben sich als zweckmäßig erwiesen, um eine wirksame Reinigung der Membranen eines Filtermoduls zu erzielen, und somit einen möglichst problemlose und effiziente Verfahrensführung der Wasseraufbereitung zu gewährleisten. Die Strömungsgeschwindigkeit der Rückspülflüssigkeit bzw. des Rückspülwassers durch ein Filtermodul kann dabei unter Berücksichtigung des vorhandenen Flüssigkeitsdrucks, beispielsweise des vorhandenen Trinkwasserdrucks, unter anderem durch die bauliche Ausgestaltung bzw. Dimensionierung der Ummantelung eines Filtermoduls beeinflusst werden. Beispielsweise kann die Strömungsgeschwindigkeit der Rückspülflüssigkeit durch ein Filtermodul bei gleichem Flüssigkeitsdruck durch eine Verringerung der Querschnittsfläche der Ummantelung für die Membranen eines Filtermoduls erhöht werden.

Bei einer weiteren, vorteilhaften Ausführungsvariante des Verfahrens kann vorgesehen sein, dass ein Filtermodul beschickungsseitig mit einem Gasvolumsstrom zwischen 0,2 Nm³/m²*h und 5,0 Nm³/m²*h und einer Strömungsgeschwindigkeit des Gases im Filtermodul zwischen 0,1 m/s und 2 m/s gereinigt werden. Die obenstehende Angabe für den Gasvolumsstrom in Nm³/m²*h bezeichnet den Volumsstrom an Gas in ,Normkubikmeter pro Quadratmeter Membranoberfläche des Filtermoduls und pro Stunde'. Die angegebenen Bereiche für den Gasvolumsstrom bzw. die Strömungsgeschwindigkeit des Gases durch ein Filtermodul haben sich als zweckmäßig erwiesen, um eine wirksame Reinigung der Membranen eines Filtermoduls zu erzielen, und somit einen möglichst problemlose und effiziente Verfahrensführung der Wasseraufbereitung zu gewährleisten. Wiederum kann die Strömungsgeschwindigkeit des Spülgases unter Berücksichtigung des vorhandenen Gasdrucks unter anderem durch die bauliche Ausgestaltung der Ummantelung eines Filtermoduls beeinflusst werden. Beispielsweise kann die Strömungsgeschwindigkeit des Gases durch ein Filtermodul bei gleichem Gasdruck durch eine Verringerung der Querschnittsfläche der Ummantelung für die Membranen eines Filtermoduls gesteigert werden.

Weiters kann es zweckmäßig sein, dass zur Beendigung eines Reinigungs- und Rückspülvorgangs für ein Filtermodul die Zufuhr von Trinkwasser in das Filtermodul gestoppt wird, das in dem Filtermodul verbleibende Rückspülwasser durch das Gas verdrängt, und über einen Abfluss abgeführt wird, und das Filtermodul vor Wiederaufnahme des Filtrationsbetriebs mit Trinkwasser befüllt wird. Dadurch kann einerseits eine vollständige Entfernung des verschmutzten, zum Rückspülen verwendeten Spülwassers aus einem Filtermodul bewerkstelligt werden. Andererseits kann das Filtermodul vor Wiederaufnahme des Filtrationsbetriebs mit sauberen Trinkwasser wieder befüllt werden, sodass ein ungewolltes bzw. unbeabsichtigtes Einbringen von Verschmutzungen in das Wasserreservoir wirksam verhindert werden kann.

Bei einer weiteren vorteilhaften Ausführungsvariante kann vorgesehen sein, dass im Filtrationsbetrieb die Durchflussmenge des Wassers über die Filtermodule erfasst wird, und ein Reinigungsvorgang für die Filtermodule bei einer Unterschreitung eines festlegbaren Schwellwerts für die Durchflussmenge vorgenommen wird. Der Reinigungsvorgang kann dabei beispielweise automatisiert von einer entsprechend programmierten Steuerungsvorrichtung des Wasseraufbereitungssystems ausgelöst werden, wodurch eine besonders effiziente Verfahrensführung zur Wasseraufbereitung bereitgestellt werden kann.

Alternativ und/oder zusätzlich kann aber auch vorgesehen sein, dass im Filtrationsbetrieb der Druckverlust über die Filtermodule erfasst wird, und ein Reinigungsvorgang für die Filtermodule bei Überschreitung eines festlegbaren Schwellwerts für den Druckverlust vorgenommen wird.

Weites kann es zweckmäßig sein, dass zur Umwälzung des Wassers im Wasserreservoir in periodischen Zeitintervallen eine mittlere Gesamtmenge an Gas mit einem Gasvolumenstrom zwischen 0,05 Nm³/m³_{wr}*h und 5 Nm³/m³_{wr}*h in das Wasserreservoir eingeleitet wird. Das Einleiten von Gas mit einem Gasvolumenstrom in diesem Bereich hat sich als effektiv erwiesen, um eine ausreichende Umwälzung bzw. Durchmischung des Wassers im Wasserreservoir herbeizuführen. Auf diese Weise kann die Bildung von Ablagerungen, beispielsweise die Bildung von Algenschichten im Wasserreservoir wirksam hintangehalten werden. Die obenstehende Angabe für den Gasvolumenstrom in Nm³/m³_{wr}*h bezeichnet die Gasmenge ,Normkubikmeter pro Kubikmeter Wasser im Wasserreservoir und pro Stunde'.

Außerdem kann es sinnvoll sein, dass das Wasser über einen strömungstechnisch in der Umlaufrezirkulationsvorrichtung angeordneten Aktivkohlefilter geführt wird. Mit einem derartigen Aktivkohlefilter sind auch Substanzen, insbesondere organische Substanzen aus dem Wasser entfernbar, welche mittels der Membranfiltrationsvorrichtung nicht oder nur ungenügend aus dem Wasser abgetrennt werden können. Dabei kann es vor allem um im Wasser gelöste, nicht-partikuläre Stoffe handeln. Bevorzugt ist ein derartiger Aktivkohlefilter wahlweise absperrbar oder durchströmbar mit der oder den Entnahmeleitung(en) der Umlaufrezirkulationsvorrichtung, oder wahlweise absperrbar oder durchströmbar mit der oder den Rückführungsleitung(en) der Umlaufrezirkulationsvorrichtung leitungsverbunden, sodass das Wasser in der Umlaufrezirkulationsvorrichtung wahlweise über den Aktivkohlefilter geführt werden kann, oder über eine Bypassleitung um den Aktivkohlefilter herum geführt werden kann.

Weiters kann es zweckmäßig sein, wenn ionische Nährstoffverbindungen mittels eines strömungstechnisch in der Umlaufrezirkulationsvorrichtung angeordneten Ionentauschers aus dem Wasser entfernt werden. Dadurch kann zusätzlich zur Entfernung von Mikroorganismen durch die Membranfiltrationsvorrichtung, den Mikroorganismen auch die Grundlage zur Vermehrung zumindest teilweise entzogen werden, und kann das Wachstum von Mikroorganismen, beispielsweise Bakterienkulturen im Wasser wirksam weiter unterdrückt bzw. zumindest die Vermehrung der Mikroorganismen verringert werden. Selbstverständlich können sowohl Anionentauscher und/oder Kationentauscher zur Anwendung kommen, um dem Wasser Nährstoff-Ionen in der anionischen und/oder kationischen Form zu entziehen.

In einer weiteren Verfahrensvariante kann vorgesehen sein, dass dem Wasser mittels einer Dosiervorrichtung Duftstoffe beigemengt werden. Duftstoffe können dem Wasser beigemengt werden, um insbesondere das Wohlbefinden von Personen, zum Beispiel von Badegästen zu steigern.

Weiters kann es sinnvoll sein, dem Wasser mittels einer Dosiervorrichtung antimikrobiell wirkenden Substanzen beizumengen. Auf diese Weise können antimikrobiell wirkende Stoffe, wie zum Beispiel Silbernanopartikel in das Wasser eingebracht werden, wodurch sich die Wasserqualität nochmals weiter steigern lassen kann.

Weiters kann eine Verfahrensführung vorteilhaft sein, bei welcher die pro Zeiteinheit mittels der Umlaufrezirkulationsvorrichtung aus dem Wasserreservoir entnommene Teilmenge des Wassers derart gewählt wird, dass durch die Rezirkulation und Filtration des Wassers eine Entfernungsrate für Mikroorganismen erzielbar ist, welche größer ist als die Wachstumsrate der Mikroorganismen in dem Wasser im gleichen Zeitintervall. Auf diese Weise kann eine Zunahme der Gesamtmenge an Mikroorganismen im Wasser wirksam hintangehalten werden, ohne dass hierfür der Einsatz von Desinfektionsmitteln nötig ist.

Schließlich kann auch eine Verfahrensführung vorgesehen sein, bei welcher die pro Zeiteinheit mittels der Umlaufrezirkulationsvorrichtung aus dem Wasserreservoir entnommene Teilmenge des Wassers derart gewählt wird, dass das insgesamt im Wasserreservoir enthaltene Volumen an Wasser, pro Tag zumindest 1 Mal und bevorzugt zwischen 2 Mal und 10 Mal mittels der Membranfiltrationsvorrichtung filtriert wird. Dadurch kann erreicht werden, dass pro Tag eine ausreichende Menge des Wassers mittels des Wasseraufbereitungssystems aufbereitet bzw. gereinigt werden kann.

Zum besseren Verständnis der Erfindung wird diese anhand der nachfolgenden Figuren näher erläutert.

Es zeigen jeweils in stark vereinfachter, schematischer Darstellung:

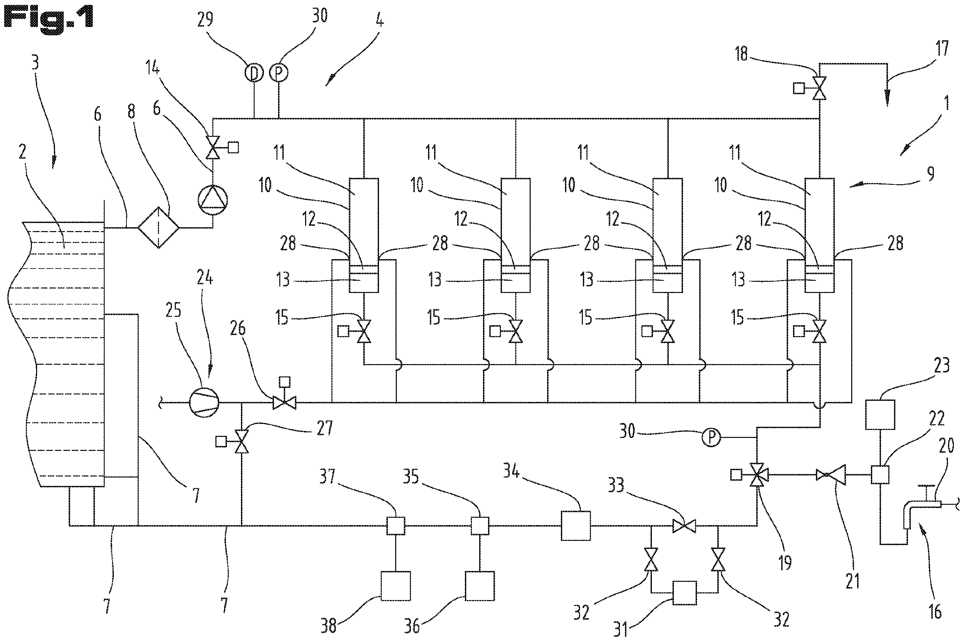

- Fig. 1: ein Wasseraufbereitungssystem zur Aufbereitung von in einem Wasserreservoir befindlichem Wasser, in stark vereinfachter, schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In der Fig. 1 ist ein Ausführungsbeispiel für ein erfindungsgemäßes Wasseraufbereitungssystem 1 zur Aufbereitung von Wasser 2, insbesondere zur Reinigung und Entkeimung des Wassers 2 dargestellt. Das aufzubereitende Wasser 2 ist in dem ausschnittsweise dargestellten Wasserreservoir 3 befindlich. Das Wasserreservoir 3 kann beispielsweise durch ein Schwimmbecken bzw. Schwimmbad, einen Teich, Aquarium oder Ähnlichen Wasserbehältnissen gebildet sein. Grundsätzlich kann es sich um ein künstlich angelegtes, aber auch um ein natürliches Wasserreservoir 3 handeln.

Wie in Fig. 1 dargestellt ist, umfasst das Wasseraufbereitungssystem 1 eine Umlaufrezirkulationsvorrichtung 4, mittels welcher eine festlegbare Menge an Wasser 2 pro Zeiteinheit aus dem Wasserreservoir 3 entnommen, und aufbereitet werden kann. Hierzu sind zumindest eine Fördervorrichtung 5, sowie eine oder mehrere Entnahmeleitung(en) 6 und eine oder mehrere Rückführungsleitung(en) 7 vorgesehen. Die Entnahmeleitung(en) 6 sind bevorzugt an oder nahe der Wasseroberfläche mit dem Wasserreservoir 3 verbunden, da in den meisten Fällen das Wasser 2 an seiner Oberfläche den höchsten Verschmutzungsgrad aufweist. Die Rückführungsleitung(en) 7 sind bevorzugt an Stellen größerer Wassertiefe und an möglichst zahlreichen Stellen mit dem Wasserreservoir 3 verbunden, um eine durch die Umlaufrezirkulation des Wassers 2 bessere Durchmischung im Wasserreservoir 3 zu generieren. Die Fördervorrichtung 5 kann beispielsweise durch eine Förder- Umwälz-, Zirkulationspumpe oder dergleichen gebildet sein. Bevorzugt ist die Fördervorrichtung 5 durch eine drehzahlsteuerbare Pumpe gebildet, sodass die aus dem Wasserreservoir 3 zur Aufbereitung pro Zeiteinheit entnommene Menge an Wasser 2 im laufenden Betrieb bedarfsabhängig angepasst werden kann.

Zur Entfernung von verhältnismäßig großen Verschmutzungen, wie etwa Blättern, Insekten etc. kann in der oder den Entnahmeleitung(en) 6 eine Filtereinrichtung 8 für grobkörnige Partikel, wie zum Beispiel ein Sandfilter oder ein konventioneller Siebfilter angeordnet sein. Derartige Filtereinrichtungen 8 sind bevorzugt nahe der oder den Entnahmestelle(n) aus dem Wasserreservoir in der oder den Entnahmeleitung(en) 6 angeordnet, und bilden damit das erste Element zur Abscheidung von Verschmutzungen aus dem Wasser 2.

Wie weiters in der Fig. 1 dargestellt ist, ist in der Umlaufrezirkulationsvorrichtung 4 eine Membranfiltrationsvorrichtung 9 angeordnet. Die Membranfiltrationsvorrichtung 9 umfasst mehrere strömungstechnisch parallel geschaltete Filtermodule 10. In der Fig. 1 sind exemplarisch vier Filtermodule 10 dargestellt, wobei es sich von selbst versteht, dass die Anzahl an einzusetzenden Filtermodulen 10 entsprechend den jeweils vorherrschenden Gegebenheiten und diversen Parametern, wie zum Beispiel dem zu erwarteten Verschmutzungsgrad des Wassers 2 oder der Filtrationskapazität eines einzelnen Filtermoduls 10 etc., angepasst werden kann.

Bevorzugt wird die Anzahl und die Filtrationskapazität der Filtermodule 10 für das Wasseraufbereitungssystem 1 derart gewählt, dass durch die Rezirkulation und Filtration des Wassers 2 eine Entfernungsrate für Mikroorganismen erzielbar ist, welche größer ist als die Wachstumsrate der Mikroorganismen in dem Wasser 2 im gleichen Zeitintervall. Außerdem wird die Anzahl und die Filtrationskapazität der Filtermodule 10 bevorzugt derart gewählt, dass das insgesamt im Wasserreservoir 3 enthaltene Volumen an Wasser 2, pro Tag zumindest 1 Mal und bevorzugt zwischen 2 Mal und 10 Mal mittels der Membranfiltrationsvorrichtung 9 filtriert werden kann.
Die Filtermodule 10 der Membranfiltrationsvorrichtung 9 können grundsätzlich auf verschiedenste Arten ausgeführt sein, bzw. verschiedenste Konstruktionsmerkmale aufweisen. Bevorzugt sind die Filtermodule 10 als Hohlfasermembranmodule ausgestaltet, welche eine Vielzahl an Hohlfasermembranen beinhalten. Die Hohlfasern können aus verschiedensten Materialien bestehen, üblicherweise werden Keramikhohlfasern oder Kunststoffhohlfasern, wie zum Beispiel Hohlfasern aus Polyethylen, Polypropylen, Polyethersulfon oder ähnlichen Kunststoffen verwendet. Üblicherweise sind derartige Hohlfasern schlauchartig mit zwei offenen Enden ausgeführt, und können verschiedenste Längen aufweisen. Die Hohlfasern sind porös ausgeführt, und von außen nach innen bzw. umgekehrt von Wasser durchströmbar. Je nach Auswahl der Porendurchmesser des Hohlfasermaterials, können Partikel bis zu einer bestimmten Größe die Membranwände der Hohlfasern passieren, größere Partikel werden aber an den Hohlfasermembranwänden zurückgehalten, worauf die Filterwirkung einer Hohlfasermembran beruht. Zur Wasseraufbereitung von Wasser in Wasserreservoirs haben sich Hohlfasermembranen mit einem Porendurchmesser zwischen 0,2 µm und 0,01 µm als besonders geeignet erwiesen, was einer sogenannten 'Ultrafiltration' entspricht.
Im in Fig. 1 dargestellten Ausführungsbeispiel können derartige Hohlfasern zum Beispiel lose hängend in Form von Bündeln oder Matten in einem auf der oberen Seite des Filtermoduls 10 befindlichen Beschickungsraum 11 angeordnet sein. Dabei können die jeweiligen offenen Enden der Hohlfasern zum Beispiel in einem Dichtmittel 12 derart eingebettet, dass die Innenlumina der Hohlfasern in einen auf der unteren Seite eines Filtermoduls 10 befindlichen Filtratraum 13 münden. Dieses Dichtmittel 12, beispielsweise ausgehärtetes Epoxy-Harz oder Ahnliches, trennt in strömungstechnischer Hinsicht den Beschickungsraum 11 und den Filtratraum 13 voneinander, sodass folglich das Wasser 2 lediglich durch Durchtritt der Hohlfasermembranwände - von der äußeren Oberfläche der Hohlfasern in das Innenlumen der Hohlfasern - von dem Beschickungsraum 11 in den Filtratraum 13 gelangt bzw. gefördert wird, und dabei filtriert wird. Das in Fig. 1 dargestellte Ausführungsbeispiel entspricht einer sogenannten ,dead end' Filtration in ,outside-in' Betriebsweise. Die Filtermodule 10 sind bevorzugt flüssigkeitsdicht und über- und unterdruckstabil ausgestaltet.

Zur Zuführung des Wassers 2 in den Beschickungsraum 11 eines Filtermoduls 10 sind die Filtermodule 10 beschickungsseitig wahlweise absperrbar oder durchströmbar mit der oder den Entnahmeleitung(en) 6 der Umlaufrezirkulationsvorrichtung 4 leitungsverbunden. Zum Absperren bzw. Öffnen dieser Leitungsverbindung ist in dem in Fig. 1 dargestellten Ausführungsbeispiel ein gemeinsames Absperr- oder Durchflussregelorgan 14 vorgesehen.

Filtratseitig sind die Filtermodule 10 durch Absperrorgane 15 wahlweise absperrbar oder durchströmbar, mit der oder den Rückführungsleitung(en) 7, sowie einer Rückspülflüssigkeitsquelle 16 leitungsverbunden. Wie im Ausführungsbeispiel gemäß der Fig. 1 dargestellt ist, ist bevorzugt jedem Filtermodul 10 filtratseitig ein Absperrorgan 15 zugeordnet ist, sodass die Filtermodule 10 jeweils unabhängig voneinander unter Umkehr der Flussrichtung über die Filtermodule mittels der Rückspülflüssigkeitsquelle 16 rückspülbar sind, was untenstehend noch näher erläutert wird.

Im Filtrationsbetrieb der Filtermodule 10 sind das Absperr- oder Durchflussregelorgan 14 und die Absperrorgane 15 geöffnet, sodass Wasser 2 aus dem Wasserreservoir 3 über die Filtermodule 10 geführt, filtriert, und über die Rückführungsleitung(en) 7 wieder in das Wasserreservoir 3 zurückgeführt werden kann. Um einen Reinigungsvorgang unter Umkehrung der Flussrichtung über die Filtermodule durchzuführen kann das Absperr- oder Durchflussregelorgan 14 geschlossen werden, um die Leitungsverbindungen des Filtermoduls 10 zu der oder den Entnahmeleitung(en) 6 abzusperren.

Im Ausführungsbeispiel gemäß der Fig. 1 sind die Filtermodule 10 beschickungsseitig außerdem wahlweise absperrbar oder durchströmbar mit einem Abfluss 17 leitungsverbunden. Hierzu ist ein wiederum ein gemeinsames Durchflussregel- oder Absperrorgan 18 vorgesehen, welches im Filtrationsbetrieb geschlossen und während eines Reinigungs- bzw. Rückspülvorgangs geöffnet werden kann.

Zum Umschalten zwischen dem Filtrationsbetrieb und einem Reinigungsvorgang bzw. dem Reinigungsbetrieb unter Rückspülung, bzw. zur Umkehrung der Flussrichtung über die Filtermodule 10 ist in dem in Fig. 1 dargestellten Ausführungsbeispiel ein Umschaltmittel 19 vorgesehen. Durch dieses Umschaltmittel 19 kann wahlweise filtratseitig der Filtermodule 10 wahlweise eine Strömungsverbindung zur der oder den Rückführungsleitung(en) 7 bereitgestellt werden, oder eine Strömungsverbindung zu der Rückspülflüssigkeitsquelle 16 bereitgestellt werden Im Filtrationsbetrieb ist somit das filtrierte Wasser in das Wasserreservoir 3 rückführbar, im Reinigungs- bzw. Rückspülbetrieb ist die Rückspülflüssigkeit bei einem gleichzeitig geöffneten Absperrorgan 15 filtratseitig in ein Filtermodul 10 einbringbar. Bei einem derartigen Rückspülvorgang kann die Rückspülflüssigkeit in den Filtratraum 13 eines Filtermoduls 10 eingeführt werden und dringt die Rückspülflüssigkeit in die Innenlumen der Hohlfasern ein. In weiterer Folge durchtritt die Rückspülflüssigkeit die Wände der Hohlfasermembranen und gelangt in den Beschickungsraum 11 des Filtermoduls 10, und kann in den Abfluss 17 abgeführt bzw. entsorgt werden. Dies entspricht einer Umkehr der Flussrichtung über ein Filtermodul 10 im Vergleich zum Filtrationsbetrieb. Alternativ zu dem in Fig. 1 dargestellten Ausführungsbeispiel können auch mehrere Umschaltmittel vorgesehen sein, etwa ein der Rückspülflüssigkeitsquelle 16 zugeordnetes Absperrorgan und ein der oder den Rückführungsleitung(en) 7 zugeordnetes Absperrorgan.

Die Rückspülflüssigkeitsquelle 16 kann beispielsweise durch ein Waschmittel beinhaltendes Vorratsbehältnis gebildet sein, aus welchem das Waschmittel mittels einer Pumpvorrichtung in ein Filtermodul eingebracht wird. Bevorzugt ist, wie in Fig. 1 dargestellt, die Rückspülflüssigkeitsquelle 16 durch eine Trinkwasserzuleitung 20 gebildet, welche wiederum bevorzugt ohne Zwischenschaltung einer separaten Fördervorrichtung, via das Umschaltmittel 19 und die Absperrorgane 15 wahlweise absperrbar oder durchströmbar filtratseitig mit den Filtermodulen 10 leitungsverbunden ist. So kann der jeweilig vorhandene Trinkwasserdruck als Antriebskraft zum Rückspülen der Filtermodule 10 genutzt werden.

Zum Ausgleichen von Druckschwankungen, oder falls die Trinkwasserzuleitung 20 einen sehr hohen Wasserdruck aufweist, kann es zweckmäßig sein, in einer gemeinsamen Trinkwasserzuleitung für die Filtermodule 10 einen Druckminderer 21 anzuordnen. Wie aus dem dargestellten Ausführungsbeispiel in der Fig. 1 weiters ersichtlich ist, kann es auch zweckmäßig sein, in der gemeinsamen Trinkwasserzuleitung für die Filtermodule 10 eine Dosiervorrichtung 22 zur Zudosierung von Reinigungschemikalien anzuordnen. Auf diese Weise können dem Rückspül- bzw. Trinkwasser Waschmittel, wie zum Beispiel Tenside oder aber auch Desinfektionsmittel zugesetzt werden, um die Reinigungseffizienz während eines Rückspülvorgangs zu verbessern. Die Reinigungschemikalien können hierzu beispielsweise aus einer oder mehreren Chemikalienquelle(n) 23, wie Chemikalientanks oder sonstigem zur Lagerung der entsprechenden Chemikalien geeigneten Behältnissen, entnommen werden.

Unabhängig von der Art bzw. der genauen Zusammensetzung der Rückspülflüssigkeit, wird ein Filtermodul 10 bevorzugt mit einem Rückspülflüssigkeitsvolumsstrom zwischen 70 l/m²ₘₑₘ*h und 700 l/m²ₘₑₘ*h und einer Strömungsgeschwindigkeit des Rückspülwassers durch das Filtermodul zwischen 0,02 m/s und 1,0 m/s rückgespült. Volumsströme bzw. Strömungsgeschwindigkeiten der Rückspülflüssigkeit in den angegebenen Bereichen haben sich als zweckmäßig erwiesen, um eine effiziente, möglichst vollständige Reinigung der Hohlfasermembranen eines Filtermoduls 10 zu erreichen.

Insbesondere umfasst das Wasseraufbereitungssystem 1, wie aus der Fig.1 ersichtlich ist, eine Gaszufuhrvorrichtung 24. Die Gaszufuhrvorrichtung 24 ist zur Reinigung der Filtermodule 10 einerseits beschickungsseitig wahlweise absperrbar oder durchströmbar mit den Filtermodulen 10 der Membranfiltrationsvorrichtung leitungsverbunden. Zusätzlich ist die Gaszufuhrvorrichtung 24 zur Umwälzung und Durchmischung des Wassers 2 im Wasserreservoir 3 auch wahlweise absperrbar oder durchströmbar mit der oder den Rückführungsleitung(en) 7 der Umlaufrezirkulationsvorrichtung 4 leitungsverbunden.

Die Gaszufuhrvorrichtung 24 kann durch diverse Gasquellen, beispielsweise Gasflaschen oder Gaskartuschen gebildet sein, welche zur Gasspülung der Filtermodule geeignete Gase beinhalten. Zum Beispiel sind Gasquellen geeignet, welche insbesondere Inertgase unter Überdruck beinhalten. Aus solchen Gasquellen kann das Gas den Filtermodulen 10 beispielsweise über Druckreduzierventile zugeführt werden. Bevorzugt ist die Gaszufuhrvorrichtung 24 durch ein Luftgebläse 25 gebildet.

Zum wahlweisen Absperren oder Öffnen der Leitungsverbindungen zwischen der Gaszufuhrvorrichtung 24 und dem Beschickungsraum 11 der Filtermodule 10 ist im Ausführungsbeispiel gemäß Fig. 1 ein gemeinsames Absperrorgan 26 vorgesehen. Zum wahlweisen Absperren oder Öffnen der Leitungsverbindungen zwischen der Gaszufuhrvorrichtung 24 und der oder den Rückführungsleitung(en) 7 der Umlaufrezirkulationsvorrichtung 4 ist wenigstens ein weiteres Absperrorgan 27 vorgesehen. Dadurch können einerseits die Hohlfasermembranen der Filtermodule 10 beschickungsseitig mit dem Gas umspült werden. Andererseits kann das Gas zur periodischen oder bedarfsabhängigen Umwälzung bzw. Durchmischung des Wassers 2 im Wasserreservoir 3 auch an einer oder mehreren Stellen in das Wasserreservoir 3 eingeleitet werden. Zur Sicherstellung einer ausreichenden Durchmischung des Wassers 2 im Wasserreservoir 3, wird dabei bevorzugt in periodischen Zeitintervallen das Gas mit einem Gasvolumenstrom zwischen 0,05 Nm³/m³_{wr}*h und 5 Nm³/m³_{wr}*h in das Wasserreservoir 3 eingeleitet. Erfindungsgemäß ist vorgesehen, dass die Gaszufuhrvorrichtung 24 entweder zur Spülung der Filtermodule 10 verwendet wird, oder zur Umwälzung bzw. Durchmischung des Wassers 2 im Wasserreservoir 3 eingesetzt wird.
Bevorzugt wird eine Spülung der Filtermodule 10 mit Gas gleichzeitig mit einer, obenstehend beschriebenen Rückspülung der Filtermodule 10 durchgeführt, wobei zur Verbesserung der Reinigungseffizienz für die Filtermodule 10, das Gas bevorzugt über wenigstens zwei beschickungsseitig an den Filtermodulen 10 ausgestaltete Gaseinleitungsanschlüsse 28 in die Filtermodule 10 eingebracht wird.
Um den Filterationsbetrieb für den Reinigungsvorgang zu unterbrechen kann das Absperr- oder Durchflussregelorgan 14 geschlossen werden, um die Filtermodule 10 strömungstechnisch von der oder den Entnahmeleitung(en) 6 zu trennen. Gleichzeitig kann das Absperrorgan 18 geöffnet werden, um die Filtermodule strömungstechnisch mit dem Abfluss 17 zu verbinden. Weiters kann das Umschaltmittel 19 umgeschaltet werden, um die Filtermodule 10 strömungstechnisch von der oder den Rückführungsleitung(en) 7 zu trennen, und die Filtermodule 10 strömungstechnisch mit der Rückspülflüssigkeitsquelle 16 zu verbinden. Zur Einleitung von Gas in den Beschickungsraum 11 der Filtermodule 10 kann das Absperrorgan 26 geöffnet werden, und damit alle Filtermodule 10 gleichzeitig mit Gas gespült werden, wobei das Spülgas den Beschickungsraum 11 von unten nach oben durchquert, und über den Abfluss 17 abgeführt werden kann.

Bevorzugt wird ein Reinigungsvorgang für die Membranen der Filtermodule 10 derart durchgeführt, dass gleichzeitig in alle Filtermodule 10 beschickungsseitig Gas eingeleitet wird, und in sequentieller Abfolge jeweils festlegbare Teilmengen der Filtermodule 10 mit der Rückspülflüssigkeit unter Umkehr der Flussrichtung über die Filtermodule 10 rückgespült werden. Hierzu können Teilmengen der den Filtermodulen 10 filtratseitig zugeordneten Absperrorgane 15 in einer sequentiellen Abfolge geöffnet bzw. geschlossen werden. Beispielsweise können im Reinigungsbetrieb zunächst die beiden in der Fig. 1 links dargestellten Filtermodule 10 durch Öffnen der diesen beiden Filtermodulen 10 zugeordneten Absperrorgane 15 mit der Rückspülflüssigkeit rückgespült werden. Anschließend kann der Rückspülvorgang für die beiden in Fig. 1 links dargestellten Filtermodule 10 durch Schließen dieser beiden Absperrorgane 15 beendet werden, und sodann die beiden in der Fig. 1 rechts dargestellten Filtermodule 10 durch Öffnen der diesen beiden Filtermodulen 10 zugeordneten Absperrorgane 15 mit der Rückspülflüssigkeit rückgespült werden. Anschließend kann auch der Rückspülvorgang für diese beiden in Fig. 1 rechts dargestellten Filtermodule 10 durch Schließen der beiden diesen Filtermodulen 10 zugeordneten Absperrorgane 15 beendet werden.

Es kann aber auch zweckmäßig sein, dass ein Reinigungsvorgang für die Membranen der Filtermodule 10 derart durchgeführt wird, dass gleichzeitig in alle Filtermodule 10 beschickungsseitig Gas eingeleitet wird, und in sequentieller Abfolge jedes Filtermodul 10 einzeln mit der Rückspülflüssigkeit unter Umkehr der Flussrichtung über die Filtermodule 10 rückgespült wird.

Bevorzugt wird beim Reinigungsbetrieb für die Filtermodule 10, in jedes Filtermodul 10 ein Gasvolumenstrom zwischen 0,2 Nm³/m²ₘₑₘ*h und 5,0 Nm³/m²ₘₑₘ*h bei einer Strömungsgeschwindigkeit des Gases im Filtermodul zwischen 0,1 m/s und 2 m/s, eingeleitet. Ein Reinigungsvorgang durch Rückspülen und gleichzeitigem Gasspülen der Membranen eines Filtermoduls 10 wird bevorzugt dadurch beendet, dass die Zufuhr von Trinkwasser in das Filtermodul gestoppt wird, das in dem Filtermodul verbleibende Rückspülwasser durch das Gas verdrängt, und über einen Abfluss abgeführt wird, und das Filtermodul vor Wiederaufnahme des Filtrationsbetriebs mit Trinkwasser befüllt wird.

Eine Reinigung der Filtermodule kann beispielsweise in periodischen, festlegbaren Zeitintervallen erfolgen. Weiters kann es aber auch zweckmäßig sein, eine Reinigung bzw. gasunterstützte Rückspülung der Filtermodule 10 bedarfsabhängig durchzuführen. Insbesondere ist es zweckmäßig eine gasunterstütze Rückspülung der Filtermodule 10 dann durchzuführen, wenn - aufgrund von Ablagerungen an den Membranwänden - während des Filtrationsbetriebes eine Abnahme der Durchflussmenge über ein Filtermodul 10 detektiert wird.

Zur Erfassung der Wasser-Durchflussmenge über die Filtermodule 10 im Filtrationsbetrieb, umfasst in dem in der Fig. 1 dargestellten Ausführungsbeispiel die Umlaufrezirkulationsvorrichtung 4 einen Durchflussmengensensor 29. Dadurch kann ein Reinigungsvorgang bzw. gasunterstützter Rückspülvorgang für die Filtermodule 10, bei einer Unterschreitung eines festlegbaren Schwellwerts für die Durchflussmenge vorgenommen werden. Grundsätzlich kann ein Reinigungsvorgang sowohl manuell als auch automatisiert eingeleitet werden. Bevorzugt wird ein Reinigungsvorgang von einer entsprechend programmierten Steuerungsvorrichtung des Wasseraufbereitungssystems 1 eingeleitet und durchgeführt, sodass ein besonders effizienter Betrieb des Wasseraufbereitungssystems 1 bereitgestellt werden kann.

Alternativ und/oder zusätzlich kann die Umlaufrezirkulationsvorrichtung 4 wenigstens zwei Drucksensoren 30 zur Erfassung des Druckverlustes über die Filtermodule 10 im Filtrationsbetrieb umfassen, und kann ein Reinigungsvorgang für die Filtermodule 10 bei Überschreitung eines festlegbaren Schwellwerts für den Druckverlust über die Filtermodule 10 vorgenommen bzw. eingeleitet werden.

Zur Wiederaufnahme des Filtrationsbetriebes nach Rückspülen aller Filtermodule 10 kann das Absperrorgan 18 geschlossen, und das Umschaltmittel 19 in den Filtrationsmodus zurückgeschaltet werden, um die Filtermodule 10 strömungstechnisch mit der oder den Rückführungsleitung(en) 7 zu verbinden, und die Filtermodule 10 strömungstechnisch von der Rückspülflüssigkeitsquelle 16 zu trennen. Nach Öffnen des Absperr- oder Durchflussregelorgans 14, sowie Öffnen aller Absperrorgane 15 kann der Filtrationsbetrieb wieder aufgenommen werden.

Zur weiteren Verbesserung der Aufbereitung des Wassers 2 im Wasserreservoir 3, kann die Umlaufrezirkulationsvorrichtung 4 des Wasseraufbereitungssystems 1 einen Aktivkohlefilter 31 umfassen, wie dies auch im Ausführungsbeispiel gemäß der Fig. 1 dargestellt ist. Mittels eines solchen Aktivkohlefilters 31 sind vor allem im Wasser 2 gelöste, nicht-partikuläre Stoffe, insbesondere niedermolekulare organische Verbindungen aus dem Wasser entfernbar. Wie in der Fig. 1 dargestellt, ist ein Aktivkohlefilter 31 bevorzugt wahlweise absperrbar oder durchströmbar mit den Leitungen der Umlaufrezirkulationsvorrichtung 4 leitungsverbunden. Dadurch kann das Wasser 2 wahlweise - durch Öffnen der Ventile 32 und Schließen des Ventils 33 - über den Aktivkohlefilter 31 geführt werden, oder das Wasser 2 - durch Öffnen des Ventils 33 und Schließen der Ventile 32 - ohne Durchführung durch den Aktivkohlefilter 31 in das Wasserreservoir 3 geführt werden. Dies kann zweckmäßig sein, um beispielsweise eine Entfernung von im Wasser erwünschten Substanzen zu verhindern, zum Beispiel während das Wasserreservoir 3 zum Baden benutzt wird.

Für alle obenstehend angeführten Absperrorgane und/oder Durchflussregelorgane 14, 15, 18, 19, 26, 27, 32 und 33 gilt, dass zum Absperren bzw. Öffnen von Leitungsverbindungen Absperrventile bzw. -organe diversester Art verwendet werden können, beispielsweise sogenannte ,Auf/Zu-Ventile'. Dabei können sowohl manuell verstellbare als auch elektronisch automatisiert verstellbare Ventile eingesetzt werden. Bevorzugt werden elektronisch ansteuerbare Ventile eingesetzt, sodass der Betrieb des Wasseraufbereitungssystems 1 mittels automatischer bzw. programmierbarer Steuerungen ermöglicht ist. Im Falle eines Durchflussregelorgans können insbesondere stufenlos verstellbare Ventile eingesetzt werden.

Wie im Ausführungsbeispiel gemäß der Fig. 1 dargestellt ist, kann die Umlaufrezirkulationsvorrichtung 4 auch einen oder mehrere Ionentauscher 34 umfassen. Aus Übersichtlichkeitsgründen ist in der Fig. 1 lediglich ein Ionentauscher 34 dargestellt. Derartige Ionentauscher 34 können als Kationentauscher oder Anionentauscher ausgestaltet sein, und können vorteilhafterweise primär zur Entfernung ionischer Nährstoffverbindungen aus dem Wasser 2 benutzt werden, indem das Wasser in der Umlaufrezirkulationsvorrichtung 4 durch einen oder mehrere Ionentauscher 34 geführt wird.

Weiters kann es zweckmäßig sein, in der Umlaufrezirkulationsvorrichtung 4 des Wasseraufbereitungssystems 1 eine Dosiervorrichtung 35 anzuordnen, mittels welcher Dosiervorrichtung 35 aus einer Chemikalienquelle 36 antimikrobiell wirkenden Substanzen in das Wasser eingebracht werden können. Zum Beispiel ist so ein Beimengen von Silber-Nanopartikeln in das Wasser 2 ermöglicht.

Schließlich kann das Wasseraufbereitungssystem 1 eine Dosiervorrichtung 37 umfassen, mittels welcher dem Wasser aus einer Duftstoffquelle 38 Duftstoffe beigemengt werden können. Im in der Fig. 1 dargestellten Ausführungsbeispiel ist eine derartige Dosiervorrichtung 37 in der Umlaufrezirkulationsvorrichtung 4 angeordnet. Grundsätzlich kann ein Beimengen von Duftstoffen allenfalls auch direkt in das Wasserreservoir 3 erfolgen.

Die Ausführungsbeispiele zeigen mögliche Ausführungsvarianten des Wasseraufbereitungssystems bzw. des Verfahrens zur Wasseraufbereitung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in der Fig. 1 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Wasseraufbereitungssystems dieses bzw. dessen Bestandteile schematisch und teilweise unmaßstäblich und/oder vergrößert und/oder verkleinert dargestellt wurden.

**Bezugszeichenaufstellung**

| | | | |
|---|---|---|---|
| 1 | Wasseraufbereitungssystem | 31 | Aktivkohlefilter |
| 2 | Wasser | 32 | Ventil |
| 3 | Wasserreservoir | 33 | Ventil |
| 4 | Umlaufrezirkulationsvorrichtung | 34 | Ionentauscher |
| 5 | Fördervorrichtung | 35 | Dosiervorrichtung |
| 6 | Entnahmeleitung | 36 | Chemikalienquelle |
| 7 | Rückführungsleitung | 37 | Dosiervorrichtung |
| 8 | Filtereinrichtung | 38 | Duftstoffquelle |
| 9 | Membranfiltrationsvorrichtung | | |
| 10 | Filtermodul | | |
| 11 | Beschickungsraum | | |
| 12 | Dichtmittel | | |
| 13 | Filtratraum | | |
| 14 | Durchflussregelorgan | | |
| 15 | Absperrorgan | | |
| 16 | Rückspülflüssigkeitsquelle | | |
| 17 | Abfluss | | |
| 18 | Absperrorgan | | |
| 19 | Umschaltmittel | | |
| 20 | Trinkwasserzuleitung | | |
| 21 | Druckminderer | | |
| 22 | Dosiervorrichtung | | |
| 23 | Chemikalienquelle | | |
| 24 | Gaszufuhrvorrichtung | | |
| 25 | Luftgebläse | | |
| 26 | Absperrorgan | | |
| 27 | Absperrorgan | | |
| 28 | Gaseinleitungsanschluss | | |
| 29 | Durchflussmengensensor | | |
| 30 | Drucksensor | | |

## Patentansprüche

1. Verfahren zur Aufbereitung von in einem Wasserreservoir (3), zum Beispiel in einem Schwimmbecken, Teich oder Aquarium befindlichem Wasser (2), insbesondere zur Reinigung und Entkeimung des Wassers (2), umfassend:
- Entnahme einer festlegbaren Menge des Wassers (2) pro Zeiteinheit aus dem Wasserreservoir (3) über eine oder mehrere Entnahmeleitung(en) (6) einer Umlaufrezirkulationsvorrichtung (4);
- Filtration der entnommenen Teilmenge des Wassers (2) mittels einer in der Umlaufrezirkulationsvorrichtung (4) angeordneten Membranfiltrationsvorrichtung (9), wobei die Membranfiltrationsvorrichtung (9) mehrere strömungstechnisch parallel geschaltete Filtermodule (10) umfasst;
- Rückführung des Wassers in das Wasserreservoir (3) über eine oder mehrere Rückführungsleitung(en) (7) der Umlaufrezirkulationsvorrichtung (4);
- Periodisches oder bedarfsabhängiges Reinigen der Membranen der Filtermodule (10) durch Rückspülen mit einer Rückspülflüssigkeit unter Umkehrung der Flussrichtung über die Filtermodule (10) im Vergleich zum Filtrationsbetrieb und Abführen der beim Rückspülen anfallenden Abfallflüssigkeit über einen Abfluss (17),
**dadurch gekennzeichnet, dass** zur Reinigung der Membranen der Filtermodule (10) der Membranfiltrationsvorrichtung (9) mittels einer Gaszufuhrvorrichtung (24) beschickungsseitig Gas in die Filtermodule (10) eingeleitet wird, oder mittels der Gaszufuhrvorrichtung (24) das Gas periodisch oder bedarfsabhängig zur Umwälzung des Wassers (2) im Wasserreservoir (3) an einer oder mehreren Stellen in das Wasserreservoir (3) eingeleitet wird, wobei die Gaszufuhrvorrichtung (24) entweder zur Spülung der Filtermodule (10) verwendet wird, oder zur Umwälzung bzw. Durchmischung des Wassers (2) im Wasserreservoir (3) eingesetzt wird.

2. Verfahren nach Anspruch 1, **dadurch gekennzeichnet, dass** ein Reinigungsvorgang für die Membranen der Filtermodule (10) derart durchgeführt wird, dass gleichzeitig in alle Filtermodule (10) beschickungsseitig Gas eingeleitet wird, und in sequentieller Abfolge jeweils festlegbare Teilmengen der Filtermodule (10) mit der Rückspülflüssigkeit unter Umkehr der Flussrichtung über die Filtermodule (10) rückgespült werden.

3. Verfahren nach Anspruch 1 oder 2, **dadurch gekennzeichnet, dass** die Filtermodule (10) mit Trinkwasser rückgespült werden.

4. Verfahren nach einem oder mehreren der Ansprüche 1 bis 3, **dadurch gekennzeichnet, dass** ein Filtermodul (10) beschickungsseitig mit einem Gasvolumsstrom zwischen 0,2 Nm³/m²ₘₑₘ*h und 5,0 Nm³/m²ₘₑₘ*h und einer Strömungsgeschwindigkeit des Gases im Filtermodul (10) zwischen 0,1 m/s und 2 m/s gereinigt wird.

5. Verfahren nach Anspruch 3 oder 4, **dadurch gekennzeichnet, dass** zur Beendigung eines Reinigungs- und Rückspülvorgangs für ein Filtermodul (10) die Zufuhr von Trinkwasser in das Filtermodul (10) gestoppt wird, das in dem Filtermodul (10) verbleibende Rückspülwasser durch das Gas verdrängt und über einen Abfluss (17) abgeführt wird, und das Filtermodul (10) vor Wiederaufnahme des Filtrationsbetriebs mit Trinkwasser befüllt wird.

6. Verfahren nach einem oder mehreren der Ansprüche 1 bis 5, **dadurch gekennzeichnet, dass** zur Umwälzung des Wassers (2) im Wasserreservoir (3) in periodischen Zeitintervallen Gas mit einem Gasvolumsstrom zwischen 0,05 Nm³/m³_{wr}*h und 5 Nm³/m³_{wr}*h in das Wasserreservoir (3) eingeleitet wird.

7. Verfahren nach einem oder mehreren der Ansprüche 1 bis 6, **dadurch gekennzeichnet, dass** ionische Nährstoffverbindungen mittels eines strömungstechnisch in der Umlaufrezirkulationsvorrichtung (4) angeordneten Ionentauschers (34) aus dem Wasser (2) entfernt werden.

8. Verfahren nach einem oder mehreren der Ansprüche 1 bis 7, **dadurch gekennzeichnet, dass** dem Wasser (2) mittels einer Dosiervorrichtung (22) Duftstoffe beigemengt werden.

9. Verfahren nach einem oder mehreren der Ansprüche 1 bis 8, **dadurch gekennzeichnet, dass** die pro Zeiteinheit mittels der Umlaufrezirkulationsvorrichtung (4) aus dem Wasserreservoir (3) entnommene Teilmenge des Wassers (2) derart gewählt wird, dass das insgesamt im Wasserreservoir (3) enthaltene Volumen an Wasser (2), pro Tag zumindest 1 Mal und bevorzugt zwischen 2 Mal und 10 Mal mittels der Membranfiltrationsanlage (9) filtriert wird.

10. Wasseraufbereitungssystem (1) zur Ausführung eines Verfahrens gemäß einem der Ansprüche 1 bis 9, umfassend
- eine Umlaufrezirkulationsvorrichtung (4) mit einer Fördervorrichtung (5), einer oder mehrerer Entnahmeleitung(en) (6) zur Entnahme einer festlegbaren Menge des Wassers (2) aus dem Wasserreservoir (3) pro Zeiteinheit, und einer oder mehrerer Rückführungsleitung(en) (7) zur Rückführung des Wassers (2) in das Wasserreservoir (3);
- eine in der Umlaufrezirkulationsvorrichtung (4) angeordnete Membranfiltrationsvorrichtung (9), welche mehrere strömungstechnisch parallel geschaltete Filtermodule (10) umfasst, wobei die Filtermodule (10) beschickungsseitig wahlweise absperrbar oder durchströmbar mit der oder den Entnahmeleitung(en) (6) und filtratseitig wahlweise absperrbar oder durchströmbar mit der oder den Rückführungsleitung(en) (7) leitungsverbunden sind, und wobei zur Reinigung der Filtermodule (10) die Filtermodule (10) filtratseitig wahlweise absperrbar oder durchströmbar mit einer Rückspülflüssigkeitsquelle (16) leitungsverbunden sind und beschickungsseitig wahlweise absperrbar oder durchströmbar mit einem Abfluss (17) leitungsverbunden sind,
**dadurch gekennzeichnet, dass** es eine Gaszufuhrvorrichtung (24) umfasst, welche zur Reinigung der Filtermodule (10) der Membranfiltrationsvorrichtung (9) beschickungsseitig wahlweise absperrbar oder durchströmbar mit den Filtermodulen (10) leitungsverbunden ist, sodass alle Filtermodule (10) mit Gas gespült werden können, und welche Gaszufuhrvorrichtung (24) zur Umwälzung und Durchmischung des Wassers (2) im Wasserreservoir (3) wahlweise absperrbar oder durchströmbar mit der oder den Rückführungsleitung(en) (7) der Umlaufrezirkulationsvorrichtung (4) leitungsverbunden ist.

11. Wasseraufbereitungssystem nach Anspruch 10, **dadurch gekennzeichnet, dass** die Filtermodule (10) wenigstens zwei Gaseinleitungsanschlüsse (28) aufweisen.

12. Wasseraufbereitungssystem nach Anspruch 10 oder 11, **dadurch gekennzeichnet, dass** die Filtermodule (10) der Membranfiltrationsvorrichtung (9) beschickungsseitig über ein gemeinsames Absperr- oder Durchflussregelorgan (14) mit der oder den Entnahmeleitung(en) (6) leitungsverbunden sind und die Filtermodule (10) beschickungsseitig über ein gemeinsames Durchflussregel- oder Absperrorgan (18) mit dem Abfluss (17) leitungsverbunden sind, und dass die Filtermodule (10) filtratseitig über wenigstens ein Umschaltmittel (19) mit der oder den Rückführungsleitung(en) (7) der Umlaufrezirkulationsvorrichtung (4) und der Rückspülflüssigkeitsquelle (16) leitungsverbunden sind.

13. Wasseraufbereitungssystem nach einem oder mehreren der Ansprüche 10 bis 12, **dadurch gekennzeichnet, dass** die Rückspülflüssigkeitsquelle (16) durch eine Trinkwasserzuleitung (20) gebildet ist.

14. Wasseraufbereitungssystem nach einem oder mehreren der Ansprüche 10 bis 13, **dadurch gekennzeichnet, dass** die Umlaufrezirkulationsvorrichtung (4) einen Ionentauscher (34) zur Entfernung von ionischen Nährstoffverbindungen umfasst.

15. Wasseraufbereitungssystem nach einem oder mehreren der Ansprüche 10 bis 14, **dadurch gekennzeichnet, dass** es eine Dosiervorrichtung (37) zur Beimengung von Duftstoffen in das Wasser (2) umfasst.

## Claims

1. A method for treating water (2) located in a water reservoir (3), for example in a swimming pool, pond or aquarium, in particular for cleaning and disinfecting the water (2), comprising:
- removing a pre-settable quantity of water (2) per unit of time from the water reservoir (3) via one or more extraction line(s) (6) of a recirculation means (4);
- filtering the removed partial quantity of water (2) by means of a membrane filtration means (9) disposed in the recirculation means (4), the membrane filtration means (9) comprising a plurality of filter modules (10) fluidically connected in a parallel arrangement;
- returning the water to the water reservoir (3) via one or more return line(s) (7) of the recirculation means (4);
- cleaning the membranes of the filter modules (10), periodically or when required, by backwashing with a backwashing liquid by reversing the direction of flow through the filter modules (10) compared with that of the filtration operation and discharging the dirty liquid occurring during backwashing via a discharge (17),
**characterized in that** in order to clean the membranes of the filter modules (10) of the membrane filtration means (9), gas is introduced by a gas supply means (24) into the filter modules (10) on the intake side or the gas is introduced into the water reservoir (3) at one or more locations by the gas supply means (24), periodically or when required, to circulate the water (2) in the water reservoir (3), the gas supply means (24) being used either to flush the filter modules (10) with gas or to circulate and mix the water (2) in the water reservoir (3).

2. The method according to claim 1, **characterized in that** an operation for cleaning the membranes of the filter modules (10) is run in such a way that gas is introduced simultaneously into all the filter modules (10) on the intake side and then pre-settable partial quantities of the filter modules (10) are sequentially backwashed with the backwashing liquid by reversing the direction of flow through the filter modules (10).

3. The method according to claim 1 or 2, **characterized in that** the filter module (10) is backwashed with mains water.

4. The method according to one or more of claims 1 to 3, **characterized in that** a filter module (10) can be cleaned on the intake side with a gas flow volume of between 0.2 Nm³/m²ₘₑₘ*h and 5.0 Nm³/m²ₘₑₘ*h and a flow speed of the gas through the filter module (10) of between 0.1 m/s and 2 m/s.

5. The method according to claim 3 or 4, **characterized in that** in order to end an operation for cleaning and flushing a filter module (10), the intake of mains water into the filter module (10) is halted, the backwashing water remaining in the filter module (10) is displaced by the gas and directed away via a discharge (17), and the filter module (10) is filled with mains water before resuming the filtration operation.

6. The method according to one or more of claims 1 to 5, **characterized in that** in order to circulate the water (2) in the water reservoir (3), gas is introduced into the water reservoir (3) with a gas flow volume of between 0.05 Nm³/m³_{wr}*h and 5 Nm³/m³_{wr}*h at periodic time intervals.

7. The method according to one or more of claims 1 to 6, **characterized in that** ionic nutrients are removed from the water (2) by means of an ion exchanger (34) fluidically incorporated in the recirculation means (4).

8. The method according to one or more of claims 1 to 7, **characterized in that** fragrances are added to the water (2) by means of a metering device (22).

9. The method according to one or more of claims 1 to 8, **characterized in that** the partial quantity of water (2) removed from the water reservoir (3) by the recirculation means (4) is selected in such a manner that the volume of water (2) contained in the water reservoir (3) overall is filtered by the membrane filtration means (9) at least once and preferably between 2 times and 10 times a day.

10. A water treatment system (1) for implementing a method according to one of claims 1 to 9, comprising
- a recirculation means (4) having a pumping device (5), one or more extraction line(s) (6) for removing a pre-settable quantity of water (2) from the water reservoir (3) per unit of time, and one or more return line(s) (7) for returning the water (2) to the water reservoir (3);
- a membrane filtration means (9) disposed in the recirculation means (4), which comprises a number of filter modules (10) fluidically connected in a parallel arrangement, and the filter modules (10) are connected to the extraction line or lines (6) by pipes that can be selectively shut off or opened to permit circulation on the intake side and on the filtrate side are connected to the return line or lines (7) by pipes that can be selectively shut off or opened to permit circulation, and in order to clean the filter modules (10), the filter modules (10) are connected to a backwashing liquid source (16) by pipes that can be selectively shut off or opened to permit circulation on the filtrate side and on the intake side are connected to a discharge (17) by pipes that can be selectively shut off or opened to permit circulation,
**characterized in that** it comprises a gas supply means (24), which, for cleaning the filter modules (10) of the membrane filtration means (9), is connected to the filter modules (10) by pipes that can be selectively shut off or opened to permit circulation on the intake side so that all of the filter modules (10) can be flushed with gas, and which gas supply means (24) is connected to the return line or lines (7) of the recirculation means (4) by pipes that can be selectively shut off or opened to permit circulation for circulating and mixing the water (2) in the water reservoir (3).

11. The water treatment system according to claim 10, **characterized in that** the filter modules (10) comprise at least two gas inlet connectors (28).

12. The water treatment system according to claim 10 or 11, **characterized in that** the filter modules (10) of the membrane filtration means (9) are connected to the extraction line or lines (6) via a common shut-off or flow-regulating member (14) on the intake side, and the filter modules (10) are connected to the discharge (17) via a common flow-regulating or shut-off member (18) on the intake side, and on the filtrate side, the filter modules (10) are connected to the return line or lines (7) of the recirculation means (4) and to the backwashing liquid source (16) via at least one switching means (19).

13. The water treatment system according to one or more of claims 10 to 12, **characterized in that** the backwashing liquid source (16) is provided in the form of a mains water supply (20).

14. The water treatment system according to one or more of claims 10 to 13, **characterized in that** the recirculation means (4) comprises an ion exchanger (34) for removing ionic nutrients.

15. The water treatment system according to one or more of claims 10 to 14, **characterized in that** it comprises a metering device (37) for adding fragrances to the water (2).

## Revendications

1. Procédé de traitement de l'eau (2) se trouvant dans un réservoir d'eau (3), par exemple dans une piscine, une pièce d'eau ou un aquarium, en particulier en vue du nettoyage ou de la désinfection de l'eau (2), comprenant :
- enlèvement d'une quantité, pouvant être prescrite, de l'eau (2) par unité de temps à partir du réservoir d'eau (3) par le biais d'une ou de plusieurs conduite(s) (6) de prélèvement d'un dispositif de remise en circulation (4) ;
- filtrage de la quantité partielle de l'eau (2) qui a été enlevée, au moyen d'un dispositif de filtration par membrane (9) disposé dans le dispositif de remise en circulation (4), le dispositif de filtration par membrane (9) comprenant plusieurs modules de filtration (10) montés fluidiquement en parallèle ;
- réacheminement de l'eau dans le réservoir d'eau (3) par le biais d'une ou de plusieurs conduite(s) de retour (7) du dispositif de remise en circulation (4) ;
- nettoyage périodique ou en fonction des besoins des membranes des modules de filtration (10) par rétrolavage avec un liquide de rétrolavage avec inversion de la direction d'écoulement par le biais des modules de filtration (10) par comparaison avec le mode de filtration et évacuation, par le biais d'un déversoir (17), du liquide résiduaire généré pendant le rétrolavage,
**caractérisé en ce que**, pour le nettoyage des membranes des modules de filtration (10) du dispositif de filtration par membrane (9), au moyen d'un dispositif d'acheminement de gaz (24), du gaz est, côté chargement, injecté dans les modules de filtration (10), ou bien, au moyen du dispositif d'acheminement de gaz (24), le gaz est, périodiquement ou en fonction des besoins, injecté dans le réservoir d'eau (3) dans un ou plusieurs endroits en vue de la recirculation de l'eau (2) dans le réservoir d'eau (3), le dispositif d'acheminement de gaz (24) étant utilisé soit pour le lavage des modules de filtration (10), soit pour la recirculation ou respectivement le brassage de l'eau (2) dans le réservoir d'eau (3).

2. Procédé selon la revendication 1, **caractérisé en ce qu'**un processus de nettoyage pour les membranes des modules de filtration (10) est réalisé de telle sorte que du gaz est injecté côté chargement simultanément dans tous les modules de filtration (10), et des quantités partielles des modules de filtration (10), pouvant être prescrites respectivement, sont rétrolavées avec le liquide de rétrolavage suivant un ordre séquentiel par le biais des modules de filtration (10) avec inversion de la direction d'écoulement.

3. Procédé selon la revendication 1 ou 2, **caractérisé en ce que** les modules de filtration (10) sont rétrolavés avec de l'eau potable.

4. Procédé selon l'une ou plusieurs des revendications 1 à 3, **caractérisé en ce qu'**un module de filtration (10) est nettoyé côté chargement avec un débit volumique de gaz entre 0,2 Nm³/m²ₘₑₘ*h et 5,0 Nm³/m²ₘₑₘ*h et à une vitesse d'écoulement du gaz dans le module de filtration (10) entre 0,1 m/s et 2 m/s.

5. Procédé selon la revendication 3 ou 4, **caractérisé en ce que**, pour terminer un processus de nettoyage et de rétrolavage pour un module de filtration (10), l'acheminement d'eau potable dans le module de filtration (10) est arrêté, l'eau de rétrolavage demeurant dans le module de filtration (10) est refoulée par le gaz et évacuée par le biais d'un déversoir (17), et le module de filtration (10) est rempli d'eau potable avant la reprise du fonctionnement de filtration.

6. Procédé selon l'une ou plusieurs des revendications 1 à 5, **caractérisé en ce que**, pour la recirculation de l'eau (2) dans le réservoir d'eau (3), du gaz est injecté à intervalles de temps périodiques avec un débit volumique de gaz entre 0,05 Nm³/m³_{wr}*h et 5 Nm³/m³_{wr}*h dans le réservoir d'eau (3).

7. Procédé selon l'une ou plusieurs des revendications 1 à 6, **caractérisé en ce que** des composés nutritifs ioniques sont enlevés de l'eau (2) au moyen d'un échangeur d'ions (34) disposé fluidiquement dans le dispositif de remise en circulation (4).

8. Procédé selon l'une ou plusieurs des revendications 1 à 7, **caractérisé en ce que** des matières odoriférantes sont ajoutées à l'eau (2) au moyen d'un dispositif de dosage (22).

9. Procédé selon l'une ou plusieurs des revendications 1 à 8, **caractérisé en ce que** la quantité partielle de l'eau (2) enlevée du réservoir d'eau (3) par unité de temps au moyen du dispositif de remise en circulation (4) est choisie de telle sorte que le volume d'eau (2) contenu au total dans le réservoir d'eau (3) est au moins 1 par jour et de préférence entre 2 fois et 10 fois par jour filtré au moyen de l'installation de filtration par membrane (9).

10. Système de traitement de l'eau (1) destiné à la réalisation d'un procédé selon l'une des revendications 1 à 9, comprenant
- un dispositif de remise en circulation (4) avec un dispositif de transport (5), une ou plusieurs conduite(s) de prélèvement (6) destinées au prélèvement d'une quantité, pouvant être prescrite, de l'eau (2) à partir du réservoir d'eau (3) par unité de temps, et avec une ou plusieurs conduite(s) de retour (7) pour le réacheminement de l'eau (2) dans le réservoir d'eau (3) ;
- un dispositif de filtration par membrane (9), disposé dans le dispositif de remise en circulation (4), qui comprend plusieurs modules de filtration (10) montés en parallèle fluidiquement, les modules de filtration (10) étant côté chargement raccordés par conduites à la ou aux conduite(s) de prélèvement (6) en pouvant au choix être bloqués ou parcourus, et étant côté filtrat raccordés par conduites à la ou aux conduite(s) de retour (7) en pouvant au choix être bloqués ou parcourus et, pour le nettoyage des modules de filtration (10), les modules de filtration (10) étant côté filtrat raccordés par conduites à une source de liquide de rétrolavage (16) en pouvant au choix être bloqués ou parcourus et étant, côté chargement, raccordés par conduites à un déversoir (17) en pouvant au choix être bloqués ou parcourus,
**caractérisé en ce qu'**il comprend un dispositif d'acheminement de gaz (24) qui, pour le nettoyage des modules de filtration (10) du dispositif de filtration par membrane (9), est côté chargement raccordé par conduites aux modules de filtration (10) en pouvant au choix être bloqué ou parcouru de telle sorte que tous les modules de filtration (10) peuvent être balayés avec du gaz, et lequel dispositif d'acheminement de gaz (24) est, pour la recirculation et le brassage de l'eau (2) dans le réservoir d'eau (3), raccordé par conduites à la ou aux conduite(s) de retour (7) du dispositif de remise en circulation (4) en pouvant au choix être bloqué ou parcouru.

11. Système de traitement de l'eau selon la revendication 10, **caractérisé en ce que** les modules de filtration (10) comportent au moins deux raccordements de conduites de gaz (28).

12. Système de traitement de l'eau selon la revendication 10 ou 11, **caractérisé en ce que** les modules de filtration (10) du dispositif de filtration par membrane (9) sont côté chargement raccordés par conduites à la ou aux conduite(s) de prélèvement (6) par le biais d'un organe de blocage ou de régulation de débit (14) commun, et les modules de filtration (10) sont côté chargement raccordés par conduites au déversoir (17) par le biais d'un organe de régulation de débit ou de blocage (18) commun, et **en ce que** les modules de filtration (10) sont, côté filtrat, raccordés par conduites à la ou aux conduite(s) de retour (7) du dispositif de remise en circulation (4) et à la source de liquide de rétrolavage (16) par le biais d'au moins un moyen de commutation (19).

13. Système de traitement de l'eau selon l'une ou plusieurs des revendications 10 à 12, **caractérisé en ce que** la source de liquide de rétrolavage (16) est formée par une conduite d'amenée d'eau potable (20).

14. Système de traitement de l'eau selon l'une ou plusieurs des revendications 10 à 13, **caractérisé en ce que** le dispositif de remise en circulation (4) comprend un échangeur d'ions (34) destiné à enlever des composés nutritifs ioniques.

15. Système de traitement de l'eau selon l'une ou plusieurs des revendications 10 à 14, **caractérisé en ce qu'**il comprend un dispositif de dosage (37) destiné à l'adjonction de matières odoriférantes dans l'eau (2).
